# EUROPEAN PATENT APPLICATION

(11) **EP 3 668 060 A1**
(43) Date of publication of application: **17.06.2020**
(21) Application number: 19214387.3
(22) Date of filing: 09.12.2019
(51) Int. Cl.: H04L 29/08

(54) **COMPUTING DEVICE AND METHOD FOR IMPLEMENTING A MICRO-CACHING FUNCTIONALITY**

(30) Priority: 13.12.2018 US 201862778951 P; 29.01.2019 US 201916260285
(71) Applicant: Riedel Communications Canada Inc., Montréal, Québec H3B3V2 (CA)
(72) Inventor: LAVOIE, Renaud, Laval, Québec H7Y 2A7 (CA); BERTHIAUME, Sebastien, St-Eustache, Québec J7P 4R4 (CA)
(74) Representative: Roche, von Westernhagen & Ehresmann

(57) **Abstract**

Computing device and method for implementing a micro-caching functionality. Cached contents are stored in memory of the computing device. The computing device receives a request for a content and determines if the requested content belongs to the cached contents stored in the memory. If the determination is positive, the requested content is retrieved from the memory and transmitted by the computing device. If the determination is negative, the request for the content is forwarded by the computing device. A determination is made that given content(s) stored in the memory shall no longer be cached. A determination is also made that a requested content shall be cached in the memory. Examples of computing device include a switch, a router, a gateway or a server.

## Description

### TECHNICAL FIELD

The present disclosure relates to the field of content distribution infrastructures implementing content caching functionalities. More specifically, the present disclosure relates to a computing device and a method for implementing a micro-caching functionality.

### BACKGROUND

In the field of video transport, advances have been made recently for generalizing the transport of video content into Internet Protocol (IP) packets. Consequently, the amount of video content transported via the IP protocols suite over the Internet infrastructure has exploded. The capacity of the Internet infrastructure is constantly upgraded to cope with the constant increase in traffic, in particular video traffic. One complementary solution for supporting the increase in video traffic consists in deploying caching servers close to the destination of the video traffic. With a caching server, the upstream Internet infrastructure is not affected by the demand for the cached content. Caching servers can be adapted for caching any type of content, and are not limited to the caching of video content.

However, such caching servers have several drawbacks. One of them is that the caching is static or quasi-static, and is not capable of dynamically adapting to the content that is most in demand at a given moment. Another drawback is that the caching servers are dedicated equipment, and legacy equipment of the Internet infrastructure (e.g. switches or routers) cannot be easily adapted to support a caching functionality.

Therefore, there is a need for a computing device and a method for implementing a micro-caching functionality.

### SUMMARY

According to a first aspect, the present disclosure provides a computing device comprising memory, at least one communication interface and a processing unit. The memory stores cached contents. The processing unit receives a request for a content via the at least one communication interface. The processing unit determines if the requested content belongs to the cached contents stored in the memory. If the determination is positive, the processing unit retrieves the requested content from the memory and transmits the requested content via the at least one communication interface. If the determination is negative, the processing unit forwards the request for the content via the at least one communication interface. The processing unit also determines that at least some of the cached contents stored in the memory shall no longer be cached and deletes the at least some of the cached contents from the memory.

According to a second aspect, the present disclosure provides a method for implementing a micro-caching functionality. The method comprises storing cached contents in memory of a computing device. The method comprises receiving, by a processing unit of the computing device, a request for a content via a communication interface of the computing device. The method comprises determining, by the processing unit, if the requested content belongs to the cached contents stored in the memory. If the determination is positive, the method comprises retrieving by the processing unit the requested content from the memory and transmitting by the processing unit the requested content via the communication interface or another communication interface of the computing device. If the determination is negative, the method comprises forwarding by the processing unit the request for the content via the communication interface or another communication interface of the computing device. The method also comprises determining, by the processing unit, that at least some of the cached contents stored in the memory shall no longer be cached and deleting, by the processing unit, the at least some of the cached contents from the memory.

According to a third aspect, the present disclosure provides a non-transitory computer program product comprising instructions executable by a processing unit of a computing device. The execution of the instructions by the processing unit of the computing device provides for implementing a micro-caching functionality, by performing the aforementioned method.

In a particular aspect, the computing device consists of a switch, a router, a gateway or a server.

In another particular aspect, a determination is made that a given content shall be cached in the memory of the computing device.

### BRIEF DESCRIPTION OF THE DRAWINGS

Embodiments of the disclosure will be described by way of example only with reference to the accompanying drawings, in which:
Figure 1 represents a traditional architecture for implementing a caching functionality;
Figures 2, 3A, 3B, 3C, 4A, 4B and 4C represent a computing device implementing a micro-caching functionality; and
Figures 5A, 5B and 5C represent a method for implementing a micro-caching functionality by the computing device represented in Figures 2, 3A-C and 4A-C.

### DETAILED DESCRIPTION

The foregoing and other features will become more apparent upon reading of the following non-restrictive description of illustrative embodiments thereof, given by way of example only with reference to the accompanying drawings.

The present disclosure aims at providing a micro-caching functionality which can be integrated in various types of equipment, and which provides a flexible and dynamic caching of contents.

The following terminology is used throughout the present disclosure:
- Content:: Any type of data which can be transported over a telecommunication infrastructure. Examples of content include: video, audio, images, text, web site pages, data generated by a computer program, data stored in a cloud infrastructure, etc.
- Micro-caching:: Caching of a content for a limited period of time. The caching begins when a particular event / condition / etc. occurs. Similarly, the caching stops when another particular event / condition / etc. occurs.

### STANDARD CACHING FUNCTIONALITY

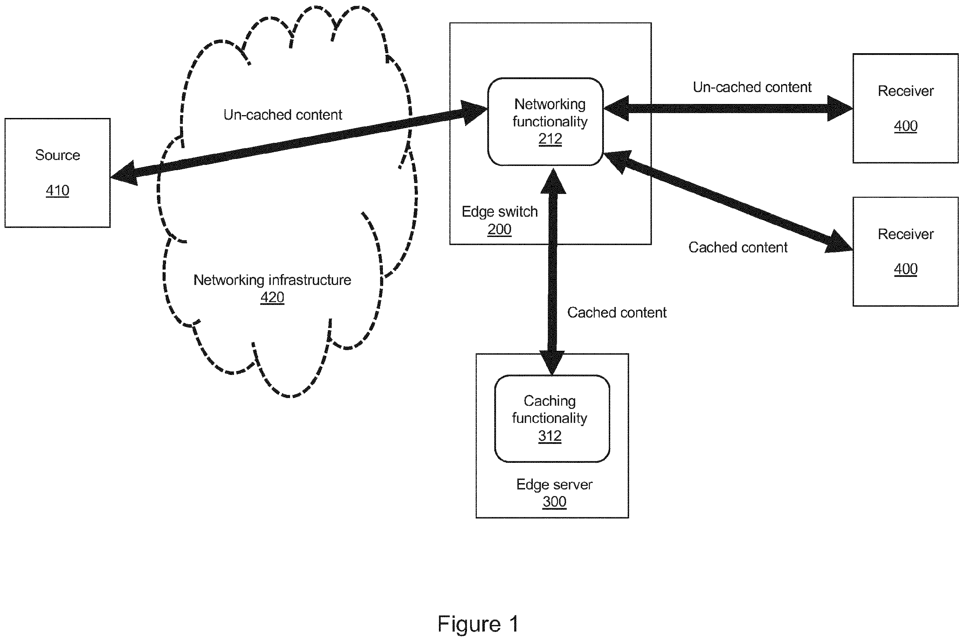

Referring now to Figure 1, a content delivery infrastructure implementing a standard caching functionality is represented. The content delivery infrastructure includes an edge communication equipment, such as the edge switch 200 represented in Figure 1. The edge switch 200 is close (from a networking topology perspective) to receivers 400. The content delivery infrastructure also includes an edge server 300 close (from a networking topology perspective) to the edge switch 200. The edge server 300 implements a caching functionality 312 for caching content.

The edge switch 200 implements a networking functionality 212. The networking functionality 212 forwards a request for an un-cached content generated by a receiver 400 to a source 410 (where the requested un-cached content is stored / generated) via a networking infrastructure 420. The networking functionality 212 forwards the requested un-cached content received from the source 410 via the networking infrastructure 420 to the receiver 400. The requested un-content is not cached by the caching functionality of the edge server 300.

The networking functionality 212 of the edge switch 200 forwards a request for a cached content generated by a receiver 400 to the edge server 300 (where the requested cached content is stored by the caching functionality 312). The networking functionality 212 forwards the requested cached content received from the edge server 300 to the receiver 400.

The networking infrastructure 420 generally includes a plurality of networking equipment (e.g. core router(s), edge router(s), switch(es), etc.) between the edge switch 200 and the source 410. The plurality of networking equipment is not represented in Figure 1 for simplification purposes. By contrast, the edge switch 200 is directly connected to the edge server 300, or at least through a low number of networking equipment. In some implementations, the functionalities of the edge switch 200 and the edge server 300 are integrated in a single equipment.

The receivers 400 are generally far from the sources 410 from a topological and / or physical perspective. By contrast, the edge server 300 is close to the receivers 400 from a topological and / or physical perspective. Thus, the caching functionality 312 implemented by the edge server 300 allows to save bandwidth in the networking infrastructure 420. The time required for delivering the cached content is also generally lower to the time required for delivering the un-cached content (the networking infrastructure 420 may introduce significant delays).

The content delivery infrastructure represented in Figure 1 is for illustration purposes only. Content delivery infrastructures including a caching functionality 312 may be implemented differently. The underlying networking protocols used for implementing such content delivery infrastructures belong to the Internet Protocol (IP) family. In particular, the networking infrastructure 420 is generally an IP networking infrastructure. The equipment at the edge (e.g. sources 410 and receivers 400) generally also use IP networking, but may also use other networking protocols.

The source 410 is any type of equipment capable of generating and / or storing content, which is delivered to the receiver 400, and optionally cached by the edge server 300. The receiver 400 is any type of equipment capable of processing the received cached or un-cached content. For instance, when the content consists of video content, examples of video sources 410 include professional video recorders for the film industry, security cameras, television broadcasting equipment, video streaming servers, etc. Examples of video receivers 400 include a personal equipment with a screen for displaying the video content, a professional equipment such as a multiviewer, etc.

The content delivery infrastructure represented in Figure 1 is typical for large content providers, who own large centralized servers (e.g. the sources 410 in Figure 1) for storing their content. The large content providers also own a plurality of caching servers (e.g. the server 300 in Figure 1) localized in various geographical areas, where at least some of the content of the large centralized servers is duplicated via caching functionalities 312.

One drawback of such content delivery infrastructures is that the caching functionality 312 is not capable of dynamically adjusting to the demand for a given content (cache the given content if it is in high demand and do not cache the given content if it is not in high demand). Furthermore, deploying dedicated edge caching servers 300 is costly in terms of networking and computing resources; particularly when the caching functionality 312 is not dynamically adjustable, resulting in a potentially significant waste or computing resources.

### COMPUTING DEVICE IMPLEMENTING A MICRO-CACHING FUNCTIONALITY

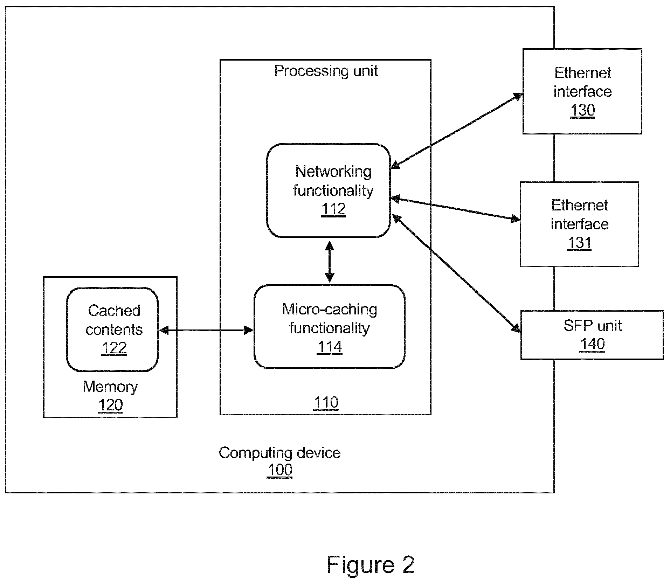

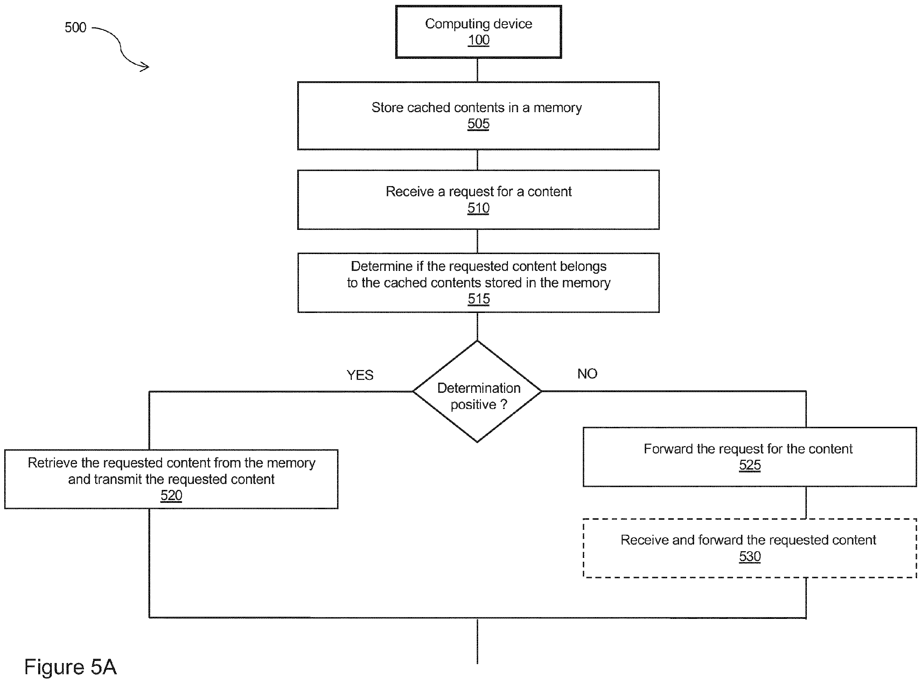

Referring now concurrently to Figures 2, 3A, 3B, 3C, 4A, 4B, 4C, 5A, 5B and 5C, a computing device 100 (Figures 2, 3A-C and 4A-C) and a method 500 (Figures 5A-C) are represented. The computing device 100 corresponds to the edge switch 200 represented in Figure 1 and implements a micro-caching functionality 114.

The computing device 100 is a networking device (e.g. a switch, a router, a gateway, etc.) and implements a networking functionality 112 (e.g. switching and / or routing). The processing unit 110 receives data packets through various communication interfaces (e.g. 130, 131 and 140) of the computing device 100, and the networking functionality 112 processes the received data packets to forward these data packets through one of the communication interfaces (e.g. 130, 131 and 140) of the computing device 100, as is well known in the art. Alternatively, the computing device 100 is a server also implementing a basic networking functionality 112.

The computing device 100 comprises a processing unit 110. The processing unit 110 comprises one or more processors (not represented in the Figures) capable of executing instructions of a computer program. Each processor may further comprise one or several cores. For instance, the micro-caching functionality 114 and the networking functionality 112 are implemented by respective computer programs executed by the processing unit 110. The processing unit 110 may implement additional functionalities not represented in the Figures for simplification purposes.

The computing device 100 comprises memory 120. The memory 120 stores instructions of the computer program(s) executed by the processing unit 110, data generated by the execution of the computer program(s), data received via communication interface(s) of the computing device 100, etc. Only a single memory 120 is represented in the Figures, but the computing device 100 may comprise several types of memories, including volatile memory (such as a volatile Random Access Memory (RAM), etc.) and non-volatile memory (such as a hard drive, electrically-erasable programmable read-only memory (EEPROM), etc.). Contents 122 cached by the computing device 100 are stored in the memory 120.

The computing device 100 comprises one or more communication interface. Examples of communication interface include an Ethernet interface, a Wi-Fi interface, an interface adapted for receiving a transceiving unit, etc. Figure 2 represents the computing device 100 having two Ethernet interfaces 130 and 131, and a third interface adapted for receiving a Small Form-factor Pluggable (SFP) unit 140. The third interface is an SFP port (not represented in Figure 2) adapted for receiving the SFP unit 140. The communication interfaces represented in Figure 2 are for illustration purposes only, and are not intended to limit the type of communication interfaces supported by the computing device 100.

Various types of transceiving unit (e.g. SFP unit 140) may be received in a communication port of the computing device 100. The only constraint is that the transceiving unit and the corresponding communication port of the computing device 100 have compatible characteristics (e.g. in terms of shape, electrical interfaces, etc.). For example, the transceiving unit is a standardized hot-pluggable transceiving unit comprising a housing with standardized dimensions (e.g. SFP, SFP+, XFP (SFP with 10 Gigabit/s data rate), Xenpak, QSFP (Quad (4-channel) SFP with 4x10 Gigabit/s data rate), QSFP+, CFP (C form-factor pluggable with 100 Gigabit/s data rate), CPAK, SFP28 (SFP with 25 Gigabit/s data rate), SFP56 (SFP with 50 Gigabit/s data rate) or any other standardized Small Form-factor Pluggable unit).

The one or more communication interface of the computing device 100 receives and transmits signals, each signal transporting one or more flow of data. For example, the flow of data consists of an IP flow transporting a data content (e.g. a video content).

An IP flow is well known in the art. It consists of a sequence of IP packets from a source (e.g. a video source generating a video IP flow) to a destination (e.g. a video receiver displaying videos based on the video IP flow). Several protocol layers are involved in the transport of the IP packets of the IP flow, including a physical layer (e.g. optical or electrical), a link layer (e.g. Media Access Control (MAC) for Ethernet), a network layer (e.g. IPv4 or IPv6), a transport layer (e.g. User Datagram Protocol (UDP)), and one or more application layers ultimately embedding an application payload (e.g. a video payload, an audio payload, a metadata payload, etc.). The IP flow provides end-to-end delivery of the application payload over an IP networking infrastructure.

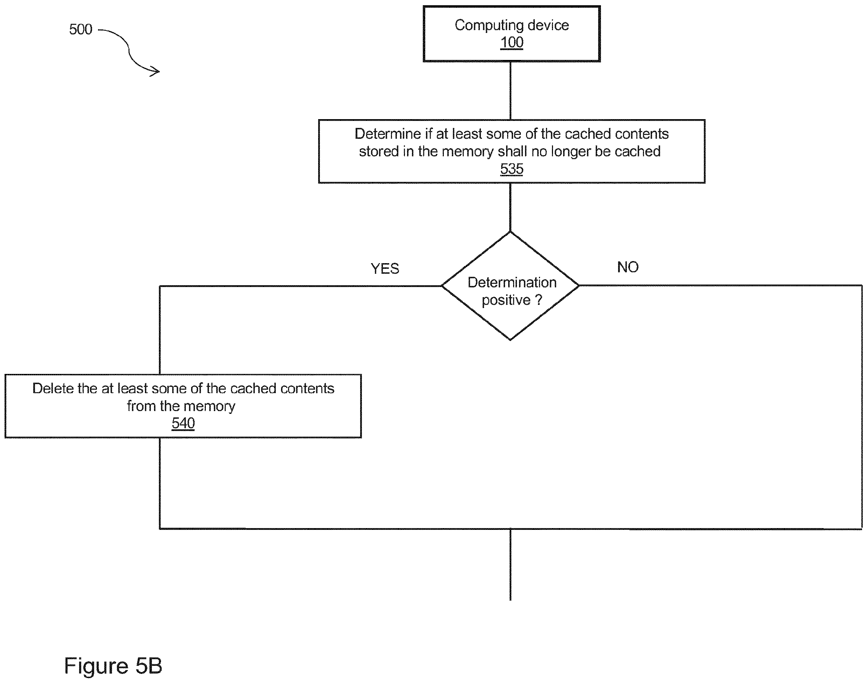

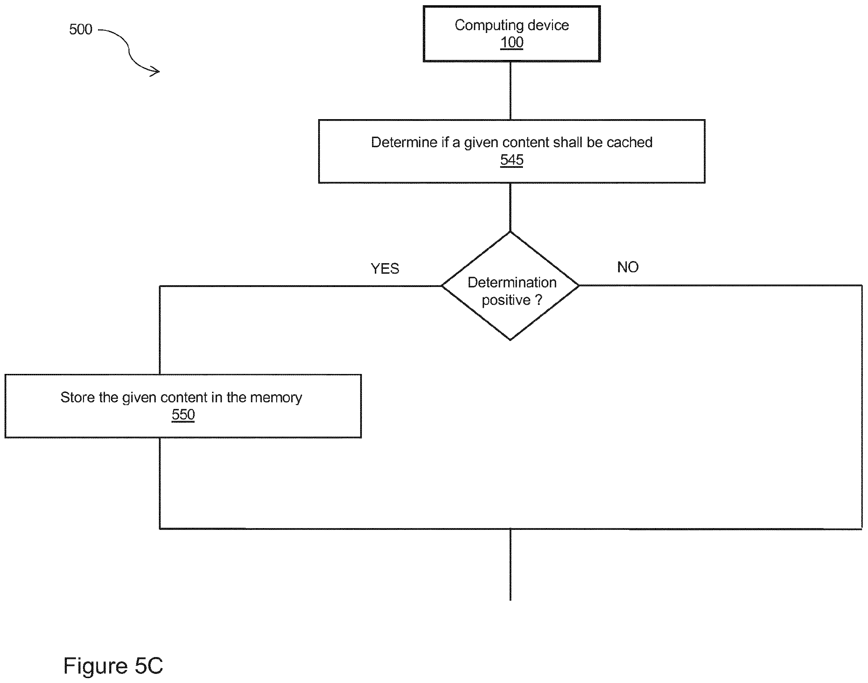

Referring now more particularly to Figures 5A, 5B and 5C, a method 500 for implementing the micro-caching functionality 114 is represented. The steps of the method 500 are executed by the processing unit 110 of the computing device 100. At least some of the steps of the method 500 are performed by the micro-caching functionality 114. Some of the steps of the method 500 may also be partially or totally performed by the networking functionality 112.

A dedicated computer program has instructions for implementing the steps of the method 500 executed by the processing unit 110 of the computing device 100. The instructions are comprised in a non-transitory computer program product (e.g. the memory 120) of the computing device 100. At least some of the instructions, when executed by the processing unit 110 of the computing device 100, provide for implementing the micro-caching functionality 114. The instructions are deliverable to the computing device 100 via an electronically-readable media such as a storage media (e.g. CD-ROM, USB key, etc.), or via communication links (e.g. via a communication network through one communication interface of the computing device 100). Some of the instructions, when executed by the processing unit 110 of the computing device 100, may also provide for implementing features of the networking functionality 112 (data reception and data transmission via communication interfaces of the computing device 100). In a particular implementation, the micro-caching functionality 114 is integrated to the networking functionality 112.

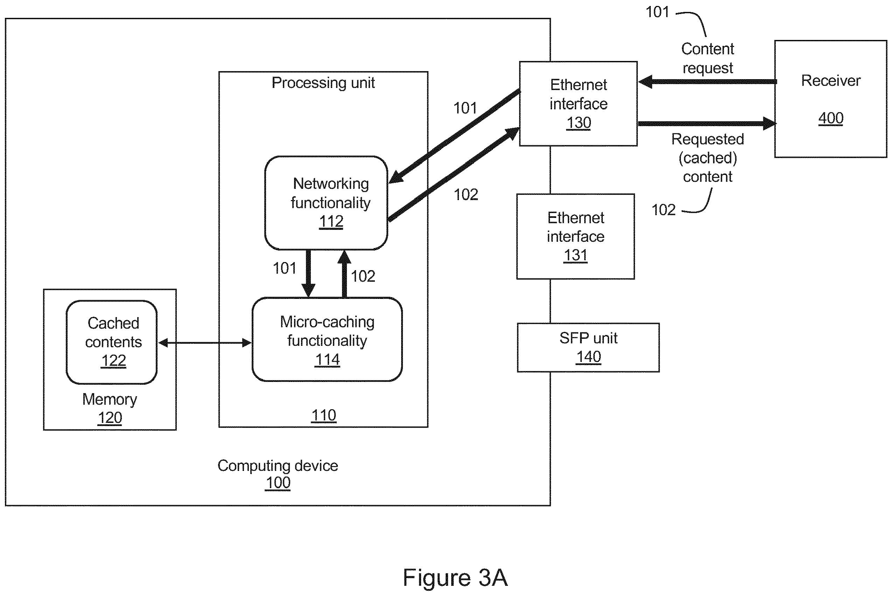

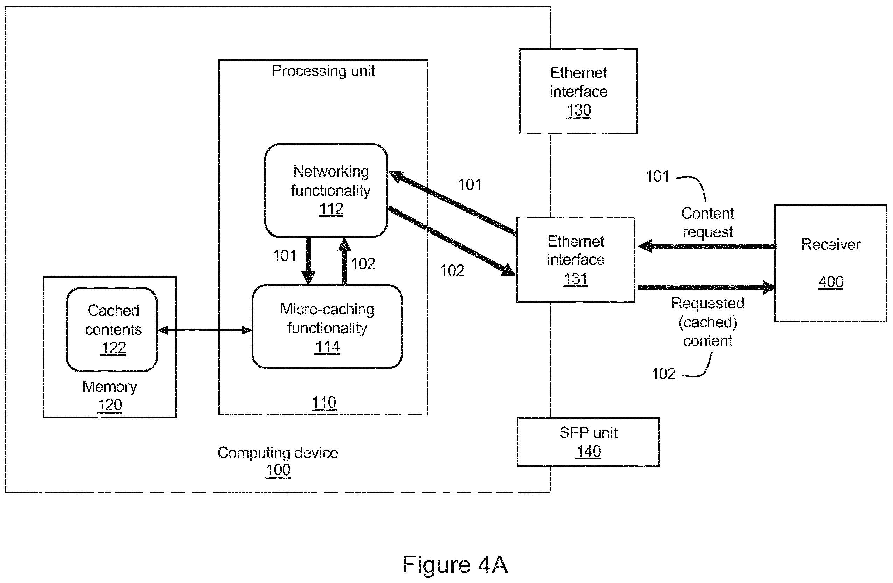

Figures 3A-C and 4A-C represent various exemplary implementations, where the reception and transmission of data is performed via different communication interfaces (130, 131 and 140) of the computing device 100. These implementations are for illustration purposes only, and are not intended to limit the type and configuration of the communications interfaces supported by the computing device 100.

The method 500 comprises the step 505 of storing the cached contents 122 in the memory 120 of the computing device 100. Step 505 is performed by the micro-caching functionality 114 executed by the processing unit 110 of the computing device 100. This step will be detailed later in the description, to provide exemplary events / conditions which trigger the caching of a given content.

The method 500 comprises the step 510 of receiving a request for a content 101 via a communication interface of the computing device 100. Step 510 is executed by the processing unit 110 of the computing device 100. Step 510 is performed partially by the micro-caching functionality 114 and partially by the networking functionality 112. The request for a content 101 is transmitted by the receiver 400.

The communication interface receiving the content request 101 may vary. Figure 3A illustrates an exemplary implementation where the content request 101 is received by the Ethernet interface 130 of the computing device 100. Figure 4A illustrates another exemplary implementation where the content request 101 is received by the Ethernet interface 131 of the computing device 100. Although not represented in the Figures, the content request 101 may also be received via the SFP unit 140 inserted in the computing device 100.

The content request 101 is transmitted from the communication interface (e.g. 130 in Figure 3A and 131 in Figure 4A) to the networking functionality 112, and further to the micro-caching functionality 114.

The method 500 comprises the step 515 of determining if the content requested at step 510 belongs to the cached contents 122 stored in the memory 120. Step 515 is performed by the micro-caching functionality 114 executed by the processing unit 110 of the computing device 100.

The content request 101 received at step 510 comprises a content identifier of the requested content. For example, the content request 101 is a Hypertext Transfer Protocol (HTTP) or HTTP Secure (HTTPS) request, and the content identifier is the Uniform Resource Locator (URL) of the requested content. In another example, the content request 101 is a subscription to a multicast group and the content identifier is the multicast group address. These two examples are for illustration purposes only, and are not intended to limit the scope of the present disclosure.

The cached contents 122 consist of a plurality of contents stored in the memory 120, each one of the plurality of cached contents having a content identifier.

At step 515, a comparison is made between the content identifier of the requested content of the content request 101 and the content identifiers of the plurality of cached contents stored in the memory 120, to determine if there is a match. A list of the content identifiers associated to the plurality of cached contents 122 may be generated and stored in the memory 120, to facilitate the comparison.

The method 500 comprises the step 520 of retrieving the requested content 102 from the memory 120, and transmitting the requested content 102 via a communication interface of the computing device 100. Step 520 is performed if the determination at step 515 is positive. Step 520 is executed by the processing unit 110 of the computing device 100. Step 520 is performed partially by the micro-caching functionality 114 and partially by the networking functionality 112. The requested (cached) content 102 is transmitted to the receiver 400.

The communication interface transmitting the requested content 102 may vary. For instance, the communication interface transmitting the requested content 102 is not the same as the communication interface receiving the content request 101. Alternatively, the communication interface transmitting the requested content 102 is the same as the communication interface receiving the content request 101. Figure 3A illustrates an exemplary implementation where the requested (cached) content 102 is transmitted by the Ethernet interface 130 of the computing device 100. Figure 4A illustrates another exemplary implementation where the requested (cached) content 102 is transmitted by the Ethernet interface 131 of the computing device 100. Although not represented in the Figures, the requested (cached) content 102 may also be transmitted via the SFP unit 140 inserted in the computing device 100.

The requested (cached) content 102 is transmitted from the micro-caching functionality 114 to the networking functionality 112, and further to the communication interface (e.g. 130 in Figure 3A and 131 in Figure 4A).

The method 500 comprises the step 525 of forwarding the content request 101 via a communication interface of the computing device 100. Step 525 is performed if the determination at step 515 is negative. Step 525 is executed by the processing unit 110 of the computing device 100. Step 525 is performed partially by the micro-caching functionality 114 and partially by the networking functionality 112. The content request 101 is forwarded to the source (of the content) 410.

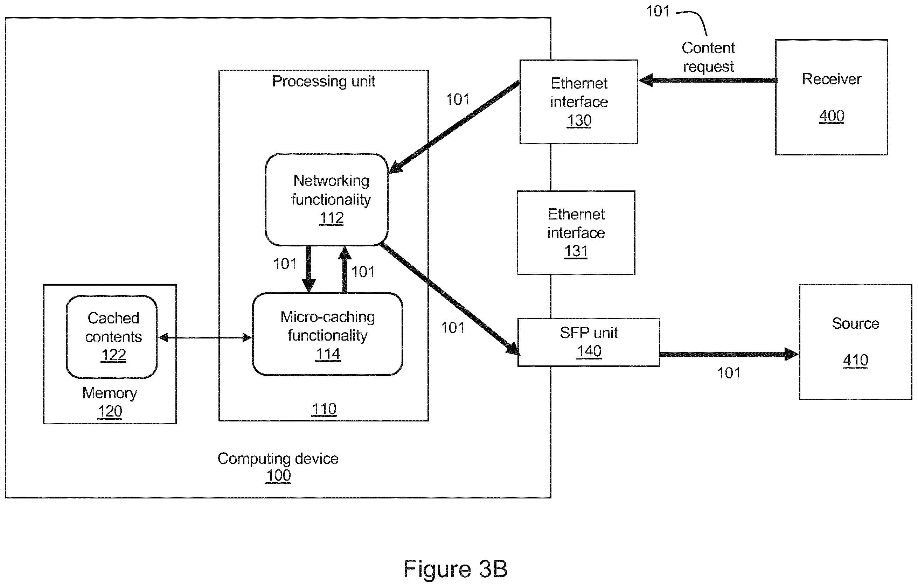

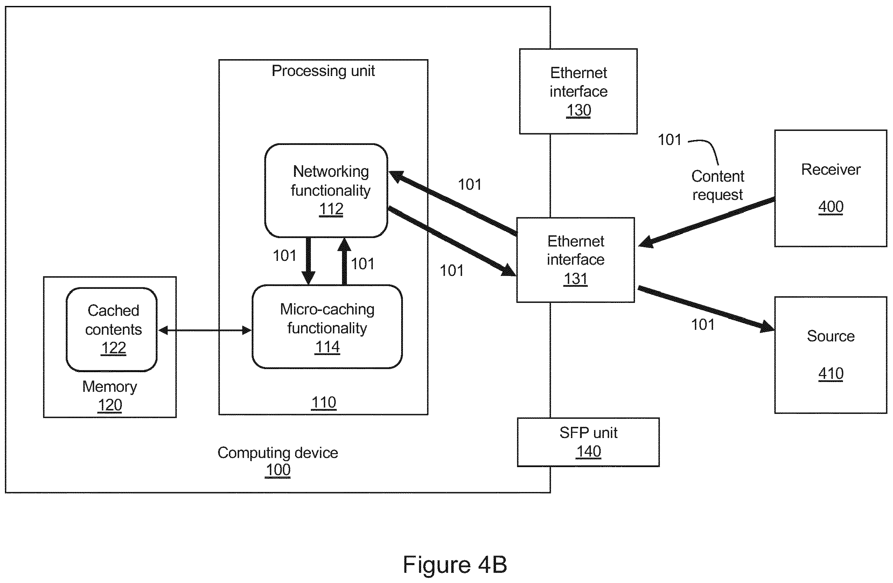

The communication interface forwarding the content request 101 may vary. For instance, the communication interface forwarding the content request 101 is not the same as the communication interface receiving the content request 101 at step 510. Alternatively, the communication interface forwarding the content request 101 is the same as the communication interface receiving the content request 101 at step 510. Figure 3B illustrates an exemplary implementation where the content request 101 is forwarded via the SFP unit 140 inserted in the computing device 100. Figure 4B illustrates another exemplary implementation where the content request 101 is forwarded via the Ethernet interface 131 of the computing device 100.

The content request 101 is forwarded from the micro-caching functionality 114 to the networking functionality 112, and further to the forwarding communication interface (e.g. 140 in Figure 3B and 131 in Figure 4B).

The method 500 comprises the optional step 530 of receiving and forwarding the requested (un-cached) content 102 via communication interface(s) of the computing device 100. Step 530 is performed after step 525 and occurs if the determination at step 515 was negative. Step 530 is executed by the processing unit 110 of the computing device 100. Step 530 is performed by the networking functionality 112, and optionally also by the micro-caching functionality 114.

If step 530 is executed, the requested (un-cached) content 102 is received (by the computing device 100) from the source 410 and forwarded (by the computing device 100) to the receiver 400. Alternatively, the requested (un-cached) content 102 transmitted from the source 410 to the receiver 400 does not go through the computing device 100, and step 530 is not performed.

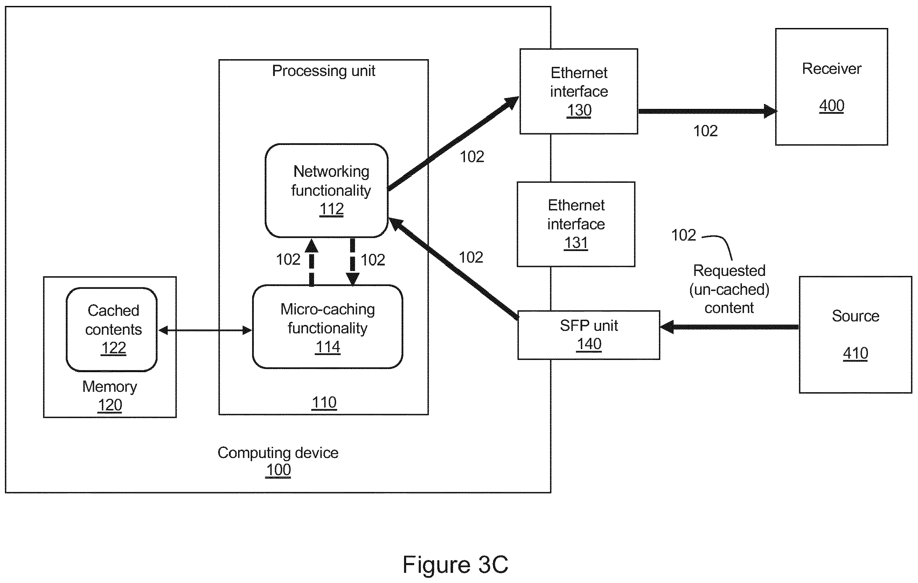

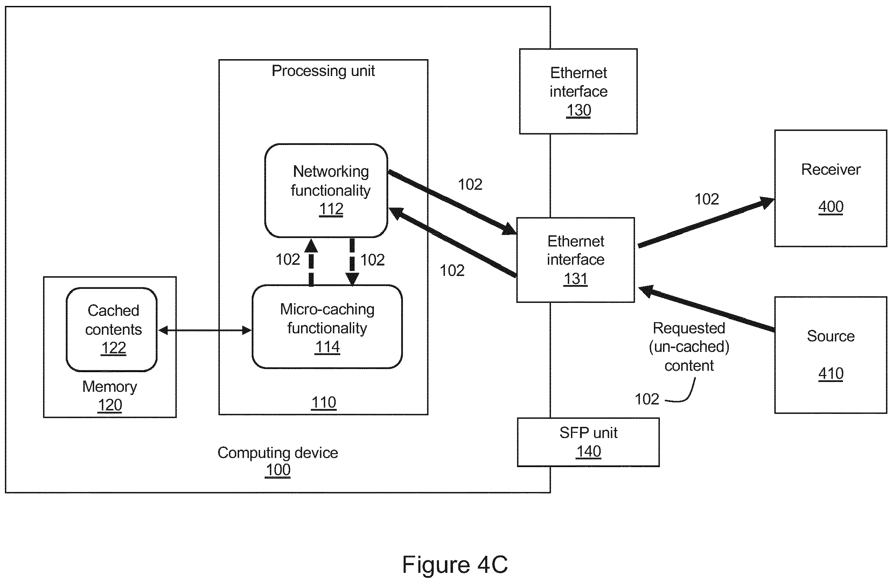

As mentioned previously, the communication interface(s) receiving and forwarding the requested content 102 may vary. Figure 3C illustrates an exemplary implementation where the requested (un-cached) content 102 is received via the SFP unit 140 inserted in the computing device 100 and forwarded by the Ethernet interface 130. Figure 4C illustrates another exemplary implementation where the requested (un-cached) content 102 is received via Ethernet interface 131 of the computing device 100 and forwarded by the Ethernet interface 131.

The requested (un-cached) content 102 is transmitted from the receiving communication interface (e.g. 140 in Figure 3C and 131 in Figure 4C) to the networking functionality 112, and further to the forwarding communication interface (e.g. 130 in Figure 3C and 131 in Figure 4C).

Optionally, the requested (un-cached) content 102 is transmitted by the networking functionality 112 to the micro-caching functionality 114 before being forwarded to the receiver 400. The micro-caching functionality 114 determines if a condition is fulfilled, to start caching the requested (un-cached) content 102 in the memory 120, as will be detailed later in the description.

The sequence of steps 510-515-520 or steps 510-515-520 (and optionally 525) is repeated each time a new request for a content 101 is received at step 510.

Reference is now made more particularly to Figure 2, along with Figures 5A-5B. The steps represented in Figure 5B aim at controlling the cached contents 122 stored in the memory 120 of the computing device 100. The steps represented in Figure 5B are executed independently of the steps represented in Figure 5A. Alternatively or complementarily, the steps represented in Figure 5B are executed after one of the steps (e.g. 520) represented in Figure 5A.

The method 500 comprises the step 535 of determining if at least some of the cached contents 122 stored in the memory 120 shall no longer be cached. Step 535 is performed by the micro-caching functionality 114 executed by the processing unit 110 of the computing device 100.

The method 500 comprises the step 540 of deleting the one or more cached content 122 determined at step 535 from the memory 120. Step 540 is performed if the determination at step 535 is positive. Step 540 is performed by the micro-caching functionality 114 executed by the processing unit 110 of the computing device 100. If the determination at step 535 is negative, no action is taken.

The determination made at step 535 is based on one or more event or condition. If the one or more event or condition is fulfilled, then the determination is positive. Otherwise, the determination is negative.

The one or more event or condition may vary and is implementation dependent. Following are examples of events or conditions, which are for illustration purposes only, and are not intended to limit the scope of the present disclosure.

For each given cached content among the cached contents 122 stored in the memory 120, a metric related to transmissions at step 520 of the given cached content by the computing device 100 is determined. If the metric reaches a threshold, the determination at step 535 is positive. Otherwise, the determination is negative. The metric is updated each time step 520 is performed. For example, the metric is the number of transmissions of the given cached content (number of executions of step 520 for the given cached content) over a period of time. If the number of transmissions over the period of time is bellow a threshold (e.g. 1000 transmissions of the given cached content per minute), then the determination is positive. This metric is representative of the given cached content no longer being in high demand, and it is therefore no longer needed to cache this given cached content.

The threshold may vary from one cached content to another, for instance based on the type of the cached content (e.g. video versus web pages, etc.), the size of the cached content, etc.

Steps 535-540 are repeated regularly, to constantly check if the memory 120 shall be freed from some of the cached contents 122. For example, a timer is set for regularly checking (e.g. every second).

Alternatively or complementarily, the deletion of one or more cached content 122 from the memory 120 is based on the reception by the computing device 100 of a command from a third party (via one of the communication interfaces of the computing device 100), the command identifying one or more cached content 122 to be deleted. This implementation is not represented in the Figures for simplification purposes.

Alternatively or complementarily, the determination that a given cached content stored in the memory shall no longer be cached is based on a determination that a duration of the storage of the given cached content in the memory 120 is greater than a given value or a determination that a given time limit is reached.

For example, a first cached content is stored for two hours in the memory 120 (and then erased from the memory 120), and a second cached content is stored for three hours in the memory 120 (and then erased from the memory 120). A third cached content is stored in the memory 120 until 6 pm (and then erased from the memory 120), and a fourth cached content is stored in the memory 120 until 8 pm (and then erased from the memory 120). For illustration purposes, if the storage of the four cached contents in the memory 120 started at 3 pm, the first content is erased at 5pm, the second cached content is erased at 6 pm, the third cached content is erased at 6 pm, and the fourth cached content is erased at 8 pm.

The duration or the time limit for a given cached content can be received via a command, as will be illustrated later in the description.

Reference is now made more particularly to Figure 2, along with Figures 5A-5C. The steps represented in Figure 5C also aim at controlling the cached contents 122 stored in the memory 120 of the computing device 100. The steps represented in Figure 5C are executed independently of the steps represented in Figures 5A and 5B. Alternatively or complementarily, the steps represented in Figure 5C are executed after one of the steps (e.g. 525 or 530) represented in Figure 5A.

The method 500 comprises the step 545 of determining if a given content shall be cached. Step 545 is performed by the micro-caching functionality 114 executed by the processing unit 110 of the computing device 100. Step 545 is performed only if the given content does not already belong to the cached contents 122 stored in the memory 120.

The method 500 comprises the step 550 of storing the given content in the memory 120. Step 550 is performed if the determination at step 545 is positive. The given content becomes part of the cached contents 122 stored in the memory 120. Step 550 is performed by the micro-caching functionality 114 executed by the processing unit 110 of the computing device 100. If the determination at step 545 is negative, no action is taken.

The determination made at step 545 is based on one or more event or condition. If the one or more event or condition is fulfilled, then the determination is positive. Otherwise, the determination is negative.

The one or more event or condition may vary and is implementation dependent. Following are examples of events or conditions, which are for illustration purposes only, and are not intended to limit the scope of the present disclosure.

For a given requested content, each time step 525 is performed for the requested content, a metric related to the forwarding at step 525 of the request 101 for the requested content by the computing device 100 is determined. If the metric reaches a threshold, the determination at step 545 is positive. Otherwise, the determination is negative. The metric is updated each time step 525 is performed. For example, the metric is the number of forwards of the request 101 for the requested content (number of executions of step 525 for the requested content) over a period of time. If the number of forwards over the period of time is above a threshold (e.g. 1500 forwards per minute), then the determination is positive. This metric is representative of the requested content being in high demand, and it is therefore more efficient to cache this requested content.

The threshold may vary from one requested content to another, for instance based on the type of the requested content (e.g. video versus web pages, etc.), the size of the requested content, etc.

If step 530 is performed, the requested content is stored in the memory 120 during or after the execution of step 530. If step 530 is not performed, the micro-caching functionality 112 sends a request for the requested content on behalf of the computing device 100 and stores the requested content in the memory 120 upon reception of a response to the request comprising the requested content (this implementation is not represented in the Figures for simplification purposes).

Alternatively or complementarily, the caching of a given content in the memory 120 is based on the reception by the computing device 100 of a command from a third party (via one of the communication interfaces of the computing device 100), the command comprising the given content to be cached in the memory 120. Alternatively, the received command comprises an identification of the content to be cached, instead of the content to be cached itself. In this case, next time the computing device 100 receives content corresponding to the identification of the content to be cached, the received content is cached. This implementation is not represented in the Figures for simplification purposes.

As mentioned previously, the command may further include a duration of the storage of the given content in the memory 120 or a time limit for storing the given content in the memory 120.

For example, a first command comprises a first content with a duration of 2 hours. A second command comprises a second content with a time limit set to 6 pm. For illustration purposes, if the two commands are received at 3 pm, the first content is stored from 3 pm to 5 pm and the second content is stored from 3 pm to 6 pm.

A neural network executed by the processing unit 110 may also be used to determine the duration or time limit based on characteristics of the contents. During a training phase, the neural network is trained with inputs consisting of characteristics of the contents and outputs consisting of the corresponding duration or time limit. During an operational phase, the neural network infers the duration or time limit for a given content based on the characteristics of the given content. Examples of characteristics for a video content include duration of the video content, type of the video content (e.g. movie, news, sports, etc.), timing of the video content (e.g. live event, replay event, on demand content, etc.), etc.

Although the present disclosure has been described hereinabove by way of non-restrictive, illustrative embodiments thereof, these embodiments may be modified at will within the scope of the appended claims without departing from the spirit and nature of the present disclosure.

## Claims

1. A computing device comprising:
memory for storing cached contents;
at least one communication interface;
a processing unit for:
receiving a request for a content via the at least one communication interface;
determining if the requested content belongs to the cached contents stored in the memory;
if the determination is positive, retrieving the requested content from the memory and transmitting the requested content via the at least one communication interface;
if the determination is negative, forwarding the request for the content via the at least one communication interface; and
determining that at least some of the cached contents stored in the memory shall no longer be cached and deleting the at least some of the cached contents from the memory.

2. The computing device of claim 1, wherein the computing device consists of a switch, a router, a gateway or a server.

3. The computing device of claim 1, wherein the at least one communication interface comprises an Ethernet port, a port adapted for receiving a transceiving unit, and a combination thereof.

4. The computing device of claim 1, wherein if the determination that the requested content belongs to the cached contents stored in the memory is negative, the processing unit further receives the requested content and forwards the requested content via the at least one communication interface.

5. The computing device of claim 1, wherein the determination that a given cached content stored in the memory shall no longer be cached is based on a metric related to transmissions of the given cached content by the computing device.

6. The computing device of claim 5, wherein the metric is a number of transmissions of the given cached content over a period of time and the determination is positive if the metric is below a threshold.

7. The computing device of claim 1, wherein the determination that a given cached content stored in the memory shall no longer be cached is based on a reception of a command by the computing device, the command identifying the given cached content to be deleted.

8. The computing device of claim 1, wherein the determination that a given cached content stored in the memory shall no longer be cached is based on a determination by the processing unit that a duration of the storage of the cached content in the memory is greater than a given value or a determination by the processing unit that a given time limit is reached.

9. The computing device of claim 1, wherein a determination is made by the processing unit that a given content shall be cached in the memory based on a reception of a command by the computing device, the command comprising the given content to be cached or an identification of the given content to be cached.

10. The computing device of claim 9, wherein the command further comprises a duration or a time limit for storing the given content in the memory.

11. A method for implementing a micro-caching functionality comprising:
storing cached contents in memory of a computing device;
receiving by a processing unit of the computing device a request for a content via a communication interface of the computing device;
determining by the processing unit if the requested content belongs to the cached contents stored in the memory;
if the determination is positive, retrieving by the processing unit the requested content from the memory and transmitting by the processing unit the requested content via the communication interface or another communication interface of the computing device;
if the determination is negative, forwarding by the processing unit the request for the content via the communication interface or another communication interface of the computing device; and
determining by the processing unit that at least some of the cached contents stored in the memory shall no longer be cached and deleting by the processing unit the at least some of the cached contents from the memory.

12. The method of claim 11, wherein the computing device consists of a switch, a router, a gateway or a server.

13. The method of claim 11, wherein the communication interface consists of an Ethernet port or a port adapted for receiving a transceiving unit.

14. The method of claim 11, wherein if the determination that the requested content belongs to the cached contents stored in the memory is negative, the processing unit further receives the requested content and forwards the requested content via the communication interface or another communication interface of the computing device.

15. The method of claim 11, wherein the determination that a given cached content stored in the memory shall no longer be cached is based on a metric related to transmissions of the given cached content by the computing device.

16. The method of claim 15, wherein the metric is a number of transmissions of the given cached content over a period of time and the determination is positive if the metric is below a threshold.

17. The method of claim 11, wherein the determination that a given cached content stored in the memory shall no longer be cached is based on a reception of a command by the computing device, the command identifying the given cached content to be deleted.

18. The method of claim 11, wherein the determination that a given cached content stored in the memory shall no longer be cached is based on a determination by the processing unit that a duration of the storage of the cached content in the memory is greater than a given value or a determination by the processing unit that a given time limit is reached.

19. The method of claim 11, wherein a determination is made by the processing unit that a given content shall be cached in the memory based on a reception of a command by the computing device, the command comprising the given content to be cached or an identification of the given content to be cached.

20. A non-transitory computer program product comprising instructions executable by a processing unit of a computing device, the execution of the instructions by the processing unit of the computing device providing for implementing a micro-caching functionality by:
storing cached contents in memory of the computing device;
receiving by the processing unit of the computing device a request for a content via a communication interface of the computing device;
determining by the processing unit if the requested content belongs to the cached contents stored in the memory;
if the determination is positive, retrieving by the processing unit the requested content from the memory and transmitting by the processing unit the requested content via the communication interface or another communication interface of the computing device;
if the determination is negative, forwarding by the processing unit the request for the content via the communication interface or another communication interface of the computing device; and
determining by the processing unit that at least some of the cached contents stored in the memory shall no longer be cached and deleting by the processing unit the at least some of the cached contents from the memory.
